# FASCICULE DE BREVET EUROPEEN

(11) **EP 0 605 308 B1**
(45) Date de publication et mention de la délivrance du brevet: **03.06.1998**
(21) Numéro de dépôt: 93403172.5
(22) Date de dépôt: 24.12.1993
(51) Int. Cl.: C09K 3/32, C02F 1/68

(54) **Composition contenant un composé tensio-actif et des glycolipides et procédé de décontamination d'un milieu poreux pollué**
Oberflächenaktive Mittel und Glycolipide enthaltende Zusammensetzung und Verfahren zur Dekontaminierung von verunreinigtem porösem Medium
Composition containing a surfactant and glycolipids for decontaminating a polluted porous medium

(30) Priorité: 30.12.1992 FR 9216033
(43) Date de publication de la demande: 06.07.1994
(73) Titulaire: INSTITUT FRANCAIS DU PETROLE, 92502 Rueil-Malmaison (FR)
(72) Inventeur: Ducreux, Jean, F-78380 Bougival (FR); Ballerini, Daniel, F-78100 St Germain en Laye (FR); Baviere, Marc, F-78590 Noisy le Roi (FR); Bocard, Christian, F-78112 Fourqueux (FR); Monin, Nicole, F-95240 Cormeilles en Parisis (FR)
(74) Mandataire: Andreeff, François

(56) Documents cités:
- EP-A- 0 048 339
- EP-A- 0 310 005
- EP-A- 0 499 434
- FR-A- 2 437 874
- GB-A- 2 053 182
- DATABASE BIOSIS BIOSCIENCES INFORMATION SERVICE, PHILADELPHIA, PA, US OBERBREMER A ET AL 'EFFECT OF THE ADDITION OF MICROBIAL SURFACTANTS ON HYDROCARBON DEGRADATION IN A SOIL POPULATION IN A STIRRED REACTOR.'

## Description

L'invention concerne une composition comprenant au moins un composé tensio-actif et des glycolipides dont la fonction acide est totalement sous forme d'esters et l'utilisation de la composition et plus généralement d'une composition contenant des glycolipides qui peuvent être sous cette forme dérivée ou sous la forme brute dans un procédé de décontamination d'un milieu pollué par des hydrocarbures.

La contamination des sols et des nappes phréatiques par des hydrocarbures résulte souvent de l'infiltration d'un produit pétrolier suite à la fuite d'une cuve ou d'une canalisation ou bien d'un déversement accidentel à la surface du sol. Les risques liés à la présence d'hydrocarbures dans le sol sont relatifs d'une part à la sécurité, en raison des risques d'explosion présentés par les vapeurs d'hydrocarbures volatils, et d'autre part, à la qualité des eaux souterraines en raison de la solubilisation des hydrocarbures aromatiques tels que le benzène, le toluène, les xylènes, l'éthylbenzène, le naphtalène, et de certains hydrocarbures aliphatiques tels que les iso- ou cycloalcanes et les oléfines.

Pour restaurer un aquifère contaminé, on commence généralement par récupérer le polluant mobile à la surface de la nappe phréatique en le faisant migrer vers un puits de pompage. Il est souvent nécessaire d'éliminer aussi le produit résiduel piégé dans la zone insaturée et dans la zone de battement car il constitue un risque à long terme.

Diverses méthodes mises en oeuvre in situ ont été décrites pour éliminer des hydrocarbures pétroliers en concentration résiduelle dans un sol. Elles consistent soit à extraire le polluant du sol, soit à le détruire par biodégradation in situ soit à combiner ces deux traitements. L'extraction peut être effectuée en phase gazeuse en entraînant les hydrocarbures par l'air mis en circulation dans la zone insaturée contaminée au moyen d'un ventilateur branché sur un puits d'extraction ; cette technique n'est applicable qu'aux fractions volatiles et peut nécessiter une longue période de mise en oeuvre.
Il a été aussi proposé d'extraire les produits résiduels en balayant la zone contaminée par de l'eau contenant des tensio-actifs et en utilisant un puits d'injection et un puits de récupération d'effluents.

L'utilisation de tensio-actifs a été également proposée pour activer la biodégradation in situ des hydrocarbures résiduels en augmentant leur accessibilité aux bactéries, aux nutriments et à l'oxygène.

Les tensio-actifs décrits pour faciliter l'extraction des hydrocarbures en émulsion dans l'eau ou activer leur biodégradation sont en général des composés non ioniques, par exemple un alcool gras polyéthoxylé ou un nonylphénol polyéthoxylé, ou des composés anioniques, par exemple ceux de la famille des sulfonates.

Mais l'utilisation de ces tensio-actifs a ses propres limitations du fait qu'elle conduit à des taux de biodégradation et à des taux d'élimination des hydrocarbures du milieu poreux pas suffisamment importants.

L'art antérieur est par exemple décrit dans le brevet EP-A-0 499 434 (Unilever), décrit une composition comprenant un tensioactif glycolipidique (sophorolipide) sous sa forme brute (mélange de formes acide et lactone) et un tensio-actif anionique, cationique ou non ionique, spécialement utilisée pour ses propriétés détergentes lors d'opérations de lavage de textiles, et Biosis, (AN 90 : 154 490) Appl. Microbiol. Biotechnol vol. 32 n° 4, 1990, pages 485-489, ISSN 0 175-7598, décrit l'effet de l'addition de tensio-actifs sophorolipidiques sur la dégradation des hydrocarbures par des bactéries dans un sol et sur la biomasse ainsi produite.

D'autres demandes de brevets FR-A-2 437 874, EP-A-0 310 005, GB-A-2 053 182 et EP-A-0 048 339 illustrent aussi l'art antérieur.

Il a été trouvé avantageux, d'utiliser, pour activer simultanément les deux processus mentionnés ci-dessus, des formulations de tensio-actifs, par exemple non ioniques, ou anioniques comprenant un cotensio-actif, glycolipidique, avantageusement de la famille des sophorolipides et préférentiellement des glycolipides, le plus souvent des sophorolipides, au moins en partie sous forme d'esters ou dont la fonction acide est totalement estérifiée. On peut penser que l'utilisation d'un tel composé améliore les propriétés interfaciales des tensio-actifs synthétiques, et en particulier augmente l'abaissement de tension interfaciale eau-huile, et rend la solution aqueuse injectée plus stable en réduisant les pertes de matière active par adsorption sur les particules de sol et, dans le cas de l'utilisation de tensio-actifs anioniques, en réduisant notamment le colmatage du milieu poreux résultant de la précipitation des sels de calcium de ces composés en présence d'argile calcique.

Un des objets de l'invention est de répondre au problème technique soulevé ci-avant et de remédier aux inconvénients de l'art antérieur, notamment de favoriser au maximum l'accessibilité des hydrocarbures aux bactéries et par voie de conséquence, de minimiser la quantité d'hydrocarbures résiduels dans le site pollué.

On a donc observé plus précisément qu'une composition contenant en poids, de 0,01 à 99,99 % d'au moins un composé tensio-actif et de 99,99 à 0,01 % d'au moins un glycolipide dont la fonction acide est totalement estérifiée permettait d'obtenir de bons résultats. Les glycolipides et plus particulièrement les sophorolipides peuvent être utilisés sous une forme brute ou avantageusement sous une forme dérivée, par exemple modifiée chimiquement au moins en partie sous forme d'ester d'acides organiques par réaction avec un alcool linéaire ou ramifié de 1 à 18 atomes de carbone, de préférence de 1 à 8 atomes. On a par ailleurs constaté qu'avec une composition comprenant de manière avantageuse, de 45 à 85 % en poids, du composé tensio-actif, de préférence 50 à 65 % et de 15 à 55 % de glycolipides et avantageusement de sophorolipides et de préférence 35 à 50 %, on parvenait à décontaminer de manière très substantielle un milieu poreux pollué notamment par des hydrocarbures.

Selon une caractéristique de la composition, le composé tensio-actif peut être anionique. Il peut être choisi avantageusement parmi les alkylarylsulfonates sous forme de sels de sodium ou de calcium, ou sous forme d'amines linéaires ou ramifiées avec des nombres de carbone compris entre 2 et 8, avec des chaînes alkyles de 10 à 16 atomes de carbone, des groupements aryles au nombre de 1 à 10, le groupement aryle pouvant être de préférence phényle ou naphtyle et des groupements sulfonates au nombre de 1 à 2. Il peut encore être choisi parmi les mono- ou diesters de sulfosuccinate de sodium ayant réagi avec des alcools linéaires ou ramifiés de 6 à 20 atomes de carbone tel que le dioctylsulfosuccinate de sodium, les alkyl ou alcényl sulfonates de sodium avec des groupements alkyles ou alcényles de C10 à C18, les sulfonates de pétrole commerciaux, issues de la sulfonation d'une coupe de pétrole et les lignosulfonates de sodium ou de calcium ou d'ammonium.

Selon une autre caractéristique de la composition, le composé tensio-actif peut être non ionique. Il peut être choisi parmi les alkylphénols polyéthoxylés avec un nombre de groupements éthoxyles compris entre 8 et 24 et des groupements alkyles avec des nombres de carbone compris entre 8 et 12 tel que le nonylphénol éthoxylé avec 9 moles d'oxyde d'éthylène (NP 9), le polyoxyéthylène alkylphénoxyéthanol, les esters d'acides gras polyéthoxylés et les éthers d'alcools gras polyéthoxylés avec un nombre de carbone de l'acide gras ou de l'alcool gras compris entre 4 et 18 et un nombre de groupements éthoxyles compris entre 4 et 12, et les mono- et polyoléates de sorbitol polyéthoxylés avec un nombre de groupements éthoxyles compris entre 4 et 8.

Le composé tensio-actif peut être cationique ou zwitterionique.

Les glycolipides doivent être évidemment solubles dans l'eau (au moins 0,1 g/l par exemple). Ils sont généralement produits par fermentation bactérienne et sont biodégradables.

Parmi les glycolipides compris dans la composition on peut citer les rhamnolipides, les glucoselipides, les tréhaloselipides, les cellobioselipides et les sophorolipides, seuls ou en mélange.

Les sophorolipides peuvent être produits par fermentation en utilisant le procédé décrit dans le brevet FR 2670798 de la demanderesse. Ils sont considérés comme étant un mélange de composés dont les structures peuvent être représentées par les formules (1) et (2), correspondant respectivement à la forme acide et à la forme lactone.

Dans les formules (1) et (2), R1 représente l'hydrogène ou un groupe acétyle (CH₃CO-), R2 représente l'hydrogène ou un radical alkyle comportant 1 à 9 atomes de carbone lorsque R3 est un radical hydrocarboné saturé comportant 7 à 16 atomes de carbone, ou R2 représente l'hydrogène ou un groupe méthyle lorsque R3 est un radical hydrocarboné insaturé comportant 13 à 17 atomes de carbone.

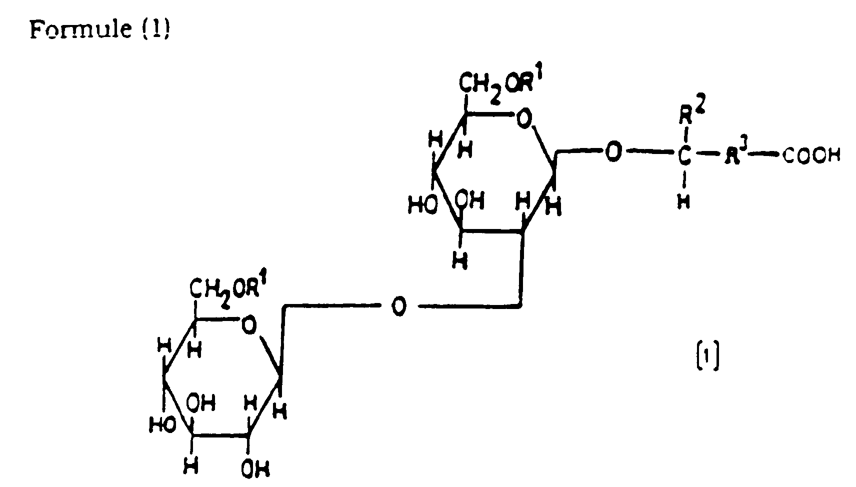

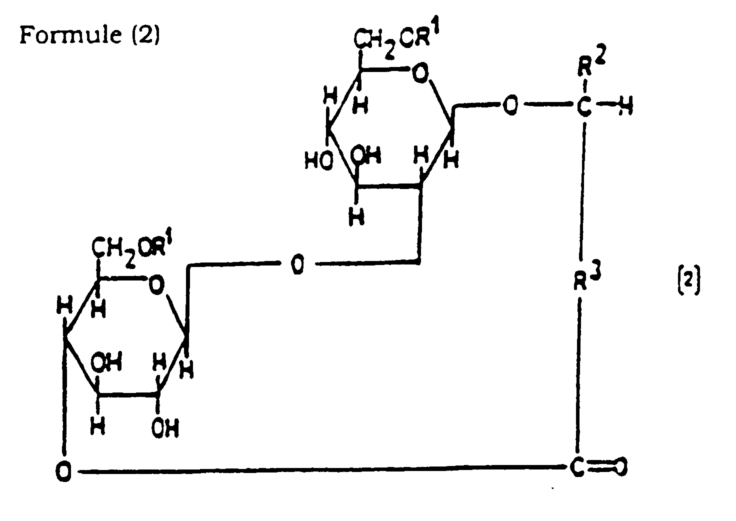

La préparation et les conditions de fermentation des autres glycolipides mentionnés ci-avant sont décrites dans la demande de brevet EP 0 499 434. Par exemple, les rhamnolipides de formule I sont produits à partir d'une bactérie du genre Pseudomonas utilisant comme substrat du sucre, du glycérol ou un alcane. Les glucoselipides de formule II peuvent être produits à partir de la bactérie Alcaligenes sp., les tréhaloselipides de formule III à partir de Arthrobacter sp. ou Rhodococcus erythropolis et les cellobioselipides de formule IV à partir du genre Ustilago. 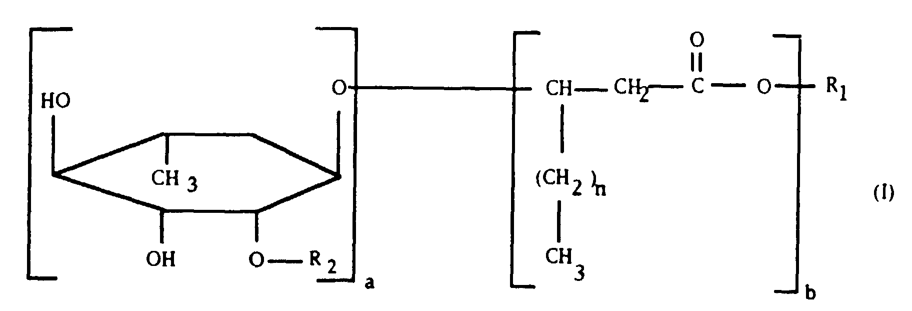 où a est égal à 1 ou 2 ; b est égal à 1 ou 2 ; n = 4 à 10, de préférence 6, R₁ est H ou un cation, de préférence H, R₂ est H ou le groupement CH₃ (CH₂)ₘ CH = CH - C-, de préférence H, m = 4 à 10. 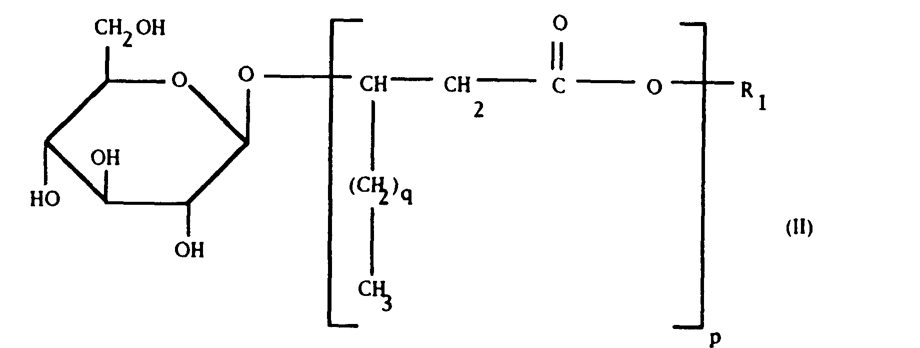 où R₁ est H ou un cation, p = 1 à 4, q = 4 à 10, de préférence 6. 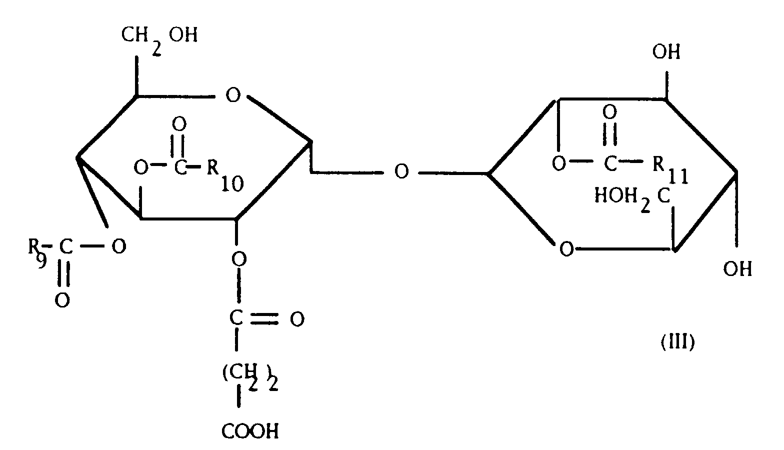 où R₉, R₁₀ et R₁₁ sont chacun un groupement hydrocarboné de 5 à 13 atomes de carbone saturé ou insaturé, hydroxylé ou pas. 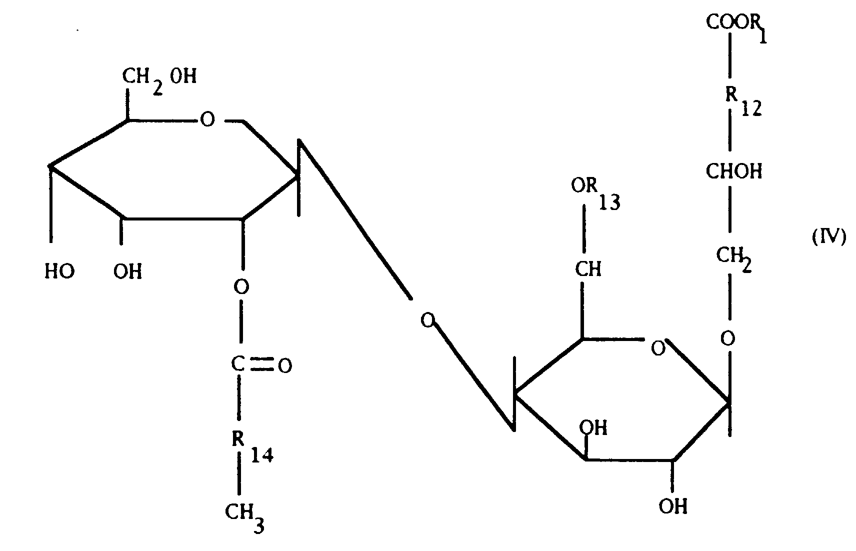 où R₁ est H ou un cation, R₁₂ est un groupement hydrocarboné de 9 à 15 atomes de carbone, de préférence 13, saturé ou insaturé, hydroxylé ou non ; R₁₃ est H ou un groupement acétyl, R₁₄ est un groupement hydrocarboné de 4 à 16 atomes de carbone saturé ou insaturé, hydroxylé ou non.

Le produit peut être directement issu du moût de fermentation. En faisant varier les conditions de fermentation des sophorolipides par exemple, on peut modifier sa composition qui peut correspondre à un pourcentage de formes acides compris entre 10 et 90 % et un taux d'acétylation de 50 à 80 %. La demanderesse a notamment décrit un procédé de production de sophorolipides pouvant contenir par exemple au moins 60 % de formes acides (demande de brevets français sous les numéros 92/06900 et 92/07409).
Ce mélange brut de formes acide et lactone peut ultérieurement être l'objet de modifications chimiques (désacétylation et/ou délactonisation partielles, ou totales) permettant de mieux adapter la structure, et donc les propriétés des composés majoritaires aux exigences de l'application. Par exemple on peut facilement ajuster leurs propriétés tensio-actives que l'on caractérise par leur HLB (balance hydrophile-lipophile).

Les modifications chimiques des glycolipides résultant de la fermentation peuvent notamment consister, lorsqu'ils contiennent des groupements acétylés et/ou une forme lactonique, en une désacétylation partielle et en une délactonisation partielle en milieu H₂SO₄ 1 N à 55°C, suivie d'une neutralisation. Une estérification au moins partielle sur résines H⁺ du groupement acide carboxylique peut être obtenue par des alcools dont la structure et la masse moléculaire constituent également des paramètres d'ajustement des propriétés.
Dans le cas des sophorolipides par exemple, l'estérification par le méthanol conduit à l'obtention d'un mélange renfermant encore la forme lactone et des esters méthyliques de la forme acide partiellement désacétylée. Ce type de sophorolipides peut avoir un taux de lactone compris entre 5 et 70 % et un taux d'acétylation variant entre 30 et 70%.
Une désacétylation et une délactonisation sensiblement totales des sophorolipides peut être obtenue par saponification, suivie d'une neutralisation. L'estérification sur résines H⁺ du groupement acide carboxylique par des alcool mentionnés ci-avant, le méthanol dans le cas présent, conduit à l'obtention d'esters méthyliques de la forme acide totalement désacétylée et ne contenant sensiblement plus de lactones.

Les cellobioselipides peuvent être désacétylés de manière sensiblement totale par saponification suivie d'une neutralisation, puis éventuellement estérifiés comme il est décrit ci-avant.

Les alcools utilisés pour la réaction d'estérification peuvent être des alcools primaires, linéaires ou ramifiés de 1 à 18 atomes de carbone, de préférence de 1 à 8 atomes de carbone. Le méthanol et l'éthanol sont particulièrement avantageux.

Comme il a été dit ci-avant, l'invention concerne un procédé de décontamination d'une formation souterraine polluée par des hydrocarbures selon lequel on injecte en solution aqueuse dans ladite formation, au moyen d'au moins un puits injecteur par exemple, la composition de glycolipides sous leur forme brute ou dérivée c'est à dire modifiée chimiquement, en quantité suffisante et dans des conditions appropriées pour décontaminer substantiellement le milieu et on récupère, par exemple par un puits de récupération, une partie au moins de la solution comprenant une partie au moins des hydrocarbures.
Plus généralement, on peut utiliser une composition contenant en poids de 0,01 à 99,99% d'au moins un tensio-actif et de 99,99 à 0,01% d'au moins un glycolipide, par exemple les sophorolipides, glucoselipides, les cellobioselipides, les rhamnolipides et les tréhaloselipides utilisés seuls ou en mélange, décrits et préparés selon la demande de brevet EP-A-0 499 434, sous leur forme brute ou sous leur forme modifiée chimiquement, telle que celles décrites ci-avant. Préférentiellement, la composition injectée peut contenir de 50 à 65% de tensio-actif et de 35 à 50% de glycolipide.

On peut utiliser avantageusement, pour décontaminer la formation souterraine ou le milieu poreux pollué par des hydrocarbures, la composition contenant des sophorolipides sous la forme brute, c'est-à-dire sous la forme d'un mélange de formes acide et lactone, comme décrit ci-avant, et préférentiellement sous la forme d'un mélange contenant la forme partiellement délactonisée et des esters méthyliques partiellement déacétylés.

Selon une caractéristique du procédé, on peut introduire dans le milieu pollué de 0,1 à 20 volumes de pore (Vₚ) et, préférentiellement, de 0,5 à 10 volumes de pore de la solution contenant la composition à une concentration de 0,1 à 20 grammes par litre de solution aqueuse.

Selon une autre caractéristique du procédé, la solution aqueuse renfermant la composition peut contenir de 0,01 à 1 % en poids d'au moins un additif choisi dans le groupe formé par le nitrate de sodium, le nitrate de potassium, le nitrate d'ammonium, le phosphate de potassium, le phosphate de sodium, le phosphate d'ammonium et une composition de polymères hydrosolubles de masse moléculaire élevée tel que le xanthane ou le polyacrylamide. Les engrais liquides à base d'azote, de phosphore et de potassium peuvent tout à fait convenir.

Pour faciliter la biodégradation du polluant, et dans la mesure où le taux de bactéries in situ s'avère insuffisant, on peut introduire dans la formation polluée de 1 x 10⁵ à 1 x 10⁹ microorganismes hydrocarbonoclastes par millilitre de solution aqueuse tels que des bactéries appartenant aux genres entre autres de Pseudomonas, Flavobacterium, Arthrobacter, Corynebacterium, Moraxella, Nocardia.

La restauration de sols contaminés par des produits pétroliers peut se faire à l'aide de méthodes physico-chimiques ou de l'association de ces dernières avec des méthodes microbiologiques. Le principe de base de la biorestauration consiste à stimuler in situ la dégradation microbienne des polluants, en favorisant l'accessibilité des hydrocarbures aux microorganismes par exemple en ajoutant des tensio-actifs, et en apportant éventuellement les éléments limitants tels que des éléments minéraux, azote et phosphore sous forme de leurs sels en solution dans l'eau, et l'oxygène si nécessaire en favorisant l'aération du milieu poreux.

Dans certains cas où la flore microbienne in situ n'est pas suffisamment active, on peut inoculer le milieu poreux pollué en injectant des microorganismes sélectionnés pour leur capacité à dégrader les hydrocarbures et cultivés au préalable en réacteur.

Toutes ces additions in situ se font en général suivant différents types d'injection, par puits crépinés verticaux, par tranchées drainantes horizontales ou par l'intermédiaire de drains mis en place par la technique du forage horizontal.

Ces injections peuvent se faire gravitairement, sous pression, par séquences alternées de phases d'imbibition (saturation du milieu poreux et apport des nutriments) et de phases de drainage (aération du milieu poreux). Selon les perméabilités des sols pollués, les débits de fluides injectés peuvent être compris entre 0,1 et 10 Vₚ/h et avantageusement entre 0,5 et 5 Vₚ/h. En général, les traitements opèrent selon la méthode "des doublets" associant soit :
- un puits ou une tranchée d'injection à un puits de récupération où la phase huile déplacée est séparée des effluents contenant en partie la composition injectée, une partie de ceux-ci pouvant être recyclée après réajustement de la teneur des différents additifs, éléments minéraux et tensio-actifs, la partie restante étant traitée sur le site par des procédés divers, de desémulsion ou d'adsorption, par exemple, avant d'être rejetée dans le milieu naturel, lorsque ses caractéristiques répondent aux normes de protection de l'environnement.
- un puits d'injection central entouré de plusieurs puits de récupération.
- plusieurs puits ou tranchées d'injection périphériques et un puits central de récupération.

Quand la nappe phréatique à traiter sert de ressource en eau potable, le choix des tensio-actifs utilisés sera orienté par la prise en considération, en particulier, de leur non persistance. Par exemple, le dioctylsulfosuccinate de sodium et les sophorolipides conviennent tout à fait.

L'invention sera mieux comprise au vu des exemples suivants illustrant de manière non limitative l'invention. Les exemples 1 à 6 montrent le rôle de cosolvant joué par les sophorolipides et le rhamnolipide dans la composition tandis que les exemples 7 à 12 illustrent leur rôle de co tensio-actif. De plus, les exemples 13 à 23 démontrent un effet surprenant de synergie en matière de décontamination d'un milieux poreux pollué par des hydrocarbures. Enfin, l'exemple 24 illustre l'efficacité d'extraction d'une formulation contenant des sophorolipides.

### EXEMPLE 1

Cet exemple concerne l'adsorption d'un tensio-actif anionique conventionnel, le dioctylsulfosuccinate de sodium (DOS) (Rhône-Poulenc, France), des sophorolipides sous forme d'esters méthyliques partiellement délactonisés (taux de lactone : 55 %) et partiellement désacétylés (taux d'acétylation : 45 %) référencés GH153 et du mélange des deux produits, sur un sable argileux dit sable de Saint-Ouen (France) de granulométrie inférieure ou égale à 800 µm. La solution initiale dans laquelle ces produits sont dissous est une eau de ville, contenant 107 ppm d'ions Ca²⁺ et à laquelle a été ajouté du chlorure de sodium (2 g/l).

Les mesures d'adsorption sont effectuées sur poudre (essais dits en batch). Le mélange constitué par la solution aqueuse de tensio-actif et le sable (rapport massique liquide/solide = 4) est agité pendant deux heures dans une étuve maintenue à 20°C. Après décantation, la solution surnageante est analysée. Les conditions initiales sont telles que la concentration des tensio-actifs, y compris celle des sophorolipides, dans la solution surnageante est supérieure à la concentration micellaire critique. L'adsorption mesurée est donc celle correspondant au plateau de l'isotherme d'adsorption.

La quantité de composé adsorbé est déterminée par la méthode des restes, par dosage du tensio-actif et/ou des sophorolipides dans la solution initiale et dans la solution surnageante obtenue après contact avec le sable. Le DOS, ainsi que les autres sulfonates mentionnés ci-avant, est dosé par la méthode de Brewer : titration par la hyamine en mélange diphasique. Les sophorolipides et glycolipides de manière générale sont dosés par la méthode dite à l'anthrone.

Les résultats sont rassemblés dans le tableau ci-dessous.

| Solution initiale | | Quantité de tensio-actif adsorbé (mg/g de sable) |
|---|---|---|
| Tensio-actif | Concentration (g/l) | |
| DOS | 3 | 1,8 |
| GH 153 | 3 | 2,1 |
| DOS | 3 | 0,5 |
| + | | |
| GH 153 | 3 | (n.d.) |
| (n.d.) : non déterminé | | |

### EXEMPLE 2

Les conditions sont les mêmes que dans l'exemple 1, mais le DOS est remplacé par un sulfonate de pétrole de masse moléculaire moyenne équivalente 415, le Petrostep B100 distribué par STEPAN EUROPE (France).

| Solution initiale | | Quantité de tensio-actif adsorbé (mg/g de sable) |
|---|---|---|
| Tensio-actif | Concentration (g/l) | |
| B100 | 3 | 1,6 |
| B100 | 3 | 0,7 |
| + | | |
| GH 153 | 3 | (n.d.) |

### EXEMPLE 3

Les conditions sont les mêmes que dans l'exemple 1, mais le DOS a été remplacé par un dodécylbenzène sulfonate d'isopropylamine, le NANSA YS94 distribué par MARCHON France SA.

| Solution initiale | | Quantité de tensio-actif adsorbé (mg/g de sable) |
|---|---|---|
| Tensio-actif | Concentration (g/l) | |
| NANSA | 5 | 4,0 |
| NANSA | 5 | 0,8 |
| + | | |
| GH 153 | 3 | (n.d.) |

### EXEMPLE 4

Les conditions sont les mêmes que dans l'exemple 1, mais le DOS a été remplacé par un tensio-actif non ionique, le nonylphénol éthoxylé (9 oxydes d'éthylène) Rhodiasurf NP9 (Rhône-Poulenc, France).

| Solution initiale | | Quantité de tensio-actif adsorbé (mg/g de sable) |
|---|---|---|
| Tensio-actif | Concentration (g/l) | |
| NP9 | 5 | 5,8 |
| NP9 | 5 | 4,1 |
| + | | |
| GH 153 | 3 | (n.d.) |

Outre l'effet de synergie observé, il a été remarqué une meilleure solubilisation des tensio-actifs dans la solution initiale en présence de sophorolipides, ce qui permet de les utiliser dans une plus large gamme de concentrations.

### EXEMPLE 5

Les conditions sont les mêmes que celles de l'exemple 1 sauf que les sophorolipides ont été remplacés par le rhamnolipide de forme acide RL1 (Petrogen Inc, (Illinois)) dont la chaîne lipidique contient 10 atomes de carbone (n = 6, a_{moyen} = 1,5, b = 2, R₁ = R₂ = H).

Les résultats sont rassemblés dans le tableau ci-dessous.

| Solution initiale | | Quantité de tensio-actif adsorbé (mg/g de sable) |
|---|---|---|
| Tensio-actif | Concentration (g/l) | |
| DOS | 3 | 1,8 |
| RL1 | 3 | 1,9 |
| DOS | 3 | 1,0 |
| + | | |
| RL1 | 3 | (n.d.) |
| (n.d.) : non déterminé | | |

### EXEMPLE 6

Les conditions sont les mêmes que dans l'exemple 5, mais le rhamnolipide acide a été estérifié par le méthanol.

| Solution initiale | | Quantité de tensio-actif adsorbé (mg/g de sable) |
|---|---|---|
| Tensio-actif | Concentration (g/l) | |
| DOS | 3 | 1,8 |
| RL1 estérifié | 3 | 2,0 |
| DOS + | 3 | 1,1 |
| RL1 estérifié | 3 | (n.d) |

Outre l'effet de synergie observé, il a été remarqué une meilleure solubilisation des tensio-actifs dans la solution initiale en présence de glycolipides, ce qui permet de les utiliser dans une plus large gamme de concentrations.

### EXEMPLE 7

Cet exemple illustre l'effet synergique obtenu par mélange d'un tensio-actif conventionnel, le dioctylsulfosuccinate de sodium (DOS), et de sophorolipides (esters méthyliques partiellement délactonisés et partiellement désacétylés ou GH 153) sur l'abaissement de la tension interfaciale entre l'eau de ville contenant 2 g/l de chlorure de sodium et des hydrocarbures d'un gazole routier.

La tension interfaciale est mesurée à 20°C à l'aide d'un tensiomètre à goutte tournante. La mesure est effectuée lorsque le diamètre de la goutte d'hydrocarbure a atteint une valeur constante, après au moins 30 min. de rotation du tube capillaire. Les valeurs obtenues sont consignées dans le tableau ci-dessous. Les concentrations sont exprimées en gramme de matière active par litre de solution.

| Tensio-actif | Concentration (g/l) | Tension interfaciale solution-gazole (mN/m) |
|---|---|---|
| DOS | 5 | 0,31 |
| GH 153 | 5 | 1,31 |
| DOS | 3 | |
| + | | 0,07 |
| GH 153 | 2 | |
| DOS | 5 | |
| + | | 0,09 |
| GH 153 | 1 | |

### EXEMPLE 8

Les conditions sont les mêmes que dans l'exemple 7, mais le DOS a été remplacé par le Petrostep B100. De plus les mesures ont été effectuées avec de l'eau de ville contenant ou non du chlorure de sodium ajouté.

| Tensio-actif | Concentration (g/l) | Tension interfaciale (mN/m) solution-gazole | |
|---|---|---|---|
| | | Eau de ville | Eau de ville + 2 g/l NaCl |
| B100 | 5 | 0,23 | 0,018 |
| GH 153 | 1 | 1,49 | - |
| GH 153 | 5 | - | 1,31 |
| B100 | 5 | | |
| + | | 0,013 | 0,008 |
| GH 153 | 1 | | |
| B100 | 1 | | |
| + | | 0,007 | 0,006 |
| GH 153 | 1 | | |

### EXEMPLE 9

Les conditions sont les mêmes que dans l'exemple 7, mais le sophorolipide GH 153 a été remplacé par le sophorolipide GH 155, un ester méthylique délactonisé et désacétylé, de manière sensiblement totale.

| Tensio-actif | Concentration (g/l) | Tension interfaciale solution-gazole (mN/m) |
|---|---|---|
| DOS | 5 | 0,31 |
| GH 155 | 5 | 1,65 |
| DOS | 3 | |
| + | | 0,09 |
| GH 155 | 2 | |

### EXEMPLE 10

Les conditions sont les mêmes que dans l'exemple 7, mais le sophorolipide GH 153 a été remplacé par le sophorolipide SO 1 (produit direct issu du moût de fermentation) (teneur en forme acide 25 %, teneur en forme lactone 75%, taux d'acétylation 75 %)

| Tensio-actif | Concentration (g/l) | Tension interfaciale solution-gazole (mN/m) |
|---|---|---|
| DOS | 5 | 0,31 |
| SO 1 | 5 | 1,10 |
| DOS | 3 | |
| + | | 0,03 |
| SO 1 | 2 | |

### EXEMPLE 11

Les conditions sont les mêmes que dans l'exemple 7, mais les sophorolipides GH 153 sont remplacés par le rhamnolipide RL1.

| Tensio-actif | Concentration (g/l) | Tension interfaciale solution-gazole (mN/m) |
|---|---|---|
| DOS | 5 | 0,31 |
| RL1 | 5 | 1,40 |
| DOS | 3 | |
| + | | 0,08 |
| RL1 | 2 | |

### EXEMPLE 12

Les conditions sont les mêmes que dans l'exemple 11, mais le rhamnolipide sous la forme acide a été estérifié totalement par le méthanol.

| Tensio-actif | Concentration (g/l) | Tension interfaciale solution-gazole (mN/m) |
|---|---|---|
| DOS | 5 | 0,31 |
| RL1 ester | 5 | 1,51 |
| DOS | 3 | |
| + | | 0,08 |
| RL1 ester | 2 | |

### EXEMPLE 13

La mise en évidence des phénomènes de lixiviation et de biodégradation des hydrocarbures piégés dans un milieu poreux se fait au laboratoire dans les conditions suivantes :
- Le dispositif expérimental comprend une colonne en verre afin d'éviter l'adsorption des hydrocarbures ; elle est thermostatée à 15°C afin de se rapprocher des conditions thermiques rencontrées au niveau des nappes phréatiques. Elle est protégée de la lumière pour éviter d'éventuels phénomènes abiotiques de photooxydation des composés hydrocarbonés. Le milieu poreux utilisé, remplissant en partie la colonne (la hauteur de remplissage d'une colonne de 30 cm de longueur et de 2,5 cm de diamètre intérieur est de 17,5 cm, correspondant à un poids de sable de 400 g), est un sable de Loire siliceux grossier GS 20 avec une distribution granulométrique comprise à 95 % entre 590 et 840 µm, préalablement calciné 8 heures à 800°C afin d'éliminer toute matière organique pouvant interférer. La perméabilité de ce sable est de l'ordre de 3.10⁻³ m/s et sa densité de 1,51.
- Ce dispositif permet de simuler des milieux poreux avec des concentrations résiduelles en eau et en huile représentatives d'un sol pollué par des hydrocarbures. A l'aide d'une pompe, on remplit la colonne d'eau par le bas. Dans le même temps on verse le sable par le haut qu'on laisse ensuite égoutter. On inocule ensuite le sable par le haut et le bas de la colonne avec une préculture d'un mélange de souches bactériennes appartenant aux genres Pseudomonas, Flavobacterium, Arthrobacter, Corynebacterium, Moraxella, Nocardia, isolées et sélectionnées au préalable pour leur capacité à dégrader les hydrocarbures. On sature ensuite le sable par le gazole routier que l'on injecte par le haut de la colonne qu'on laisse ensuite s'égoutter.
- L'expérimentation proprement dite est alors lancée en réalisant des cycles imbibition-drainage avec un milieu minéral dont la composition est la suivante : (NH₄)₂SO₄ : 0,3 g/l, NH₄NO₃ : 0,15 g/l, KH₂PO₄: 0,3 g/l, Na₂HPO₄, 2 H₂O : 0,2 g/l, MgSO₄, 7 H₂O : 0,05 g/l, CaCl₂ : 0,05 g/l. Ce milieu est additionné des différents produits tensio-actifs testés. Chaque cycle dure 6 heures avec une durée de remplissage de la colonne, en milieu minéral, de 25 min., suivie d'une période de repos de 5 min. et d'une phase d'égouttage de 10 min., et enfin le maintien de la colonne égouttée pendant 5 heures 20 min. Ces phases successives de saturation en eau et d'assèchement permettent d'alterner respectivement une phase d'apport de nutriments minéraux et une phase d'aération.
- L'huile résiduelle piégée dans le sable en fin d'essai, après environ 60 jours, est extraite dans un soxhlet d'abord avec le n-hexane pendant 8 heures puis avec le chlorure de méthylène pendant 8 heures. Le premier extrait organique est concentré par évaporation, et une séparation des trois familles composant le mélange est réalisé, à savoir les hydrocarbures aliphatiques, les hydrocarbures aromatiques et les composés polaires, les deux premières étant ensuite quantifiées par chromatographie en phase gazeuse, la troisième par pesée. Les hydrocarbures contenus dans le second extrait (dichlorométhane) sont dosés par pesée après évaporation du solvant et additionnés à ceux récupérés dans le n-hexane.
- On procède aussi à l'extraction et à l'analyse des hydrocarbures entraînés par les effluents aqueux, selon des méthodes comparables à celles utilisées pour le sable.

L'expérimentation est effectuée selon le protocole décrit précédemment. Le milieu minéral, servant à l'imbibition de la colonne, est additionné du tensio-actif non ionique de l'exemple 4, le NP 9. La concentration en tensio-actif est de 0,05 % (en poids) par rapport au milieu minéral utilisé.

Après 60 jours pendant lesquels on a pratiqué les cycles d'imbibition-drainage du milieu poreux, l'essai est arrêté, le sable et les effluents aqueux sont extraits, et les hydrocarbures ainsi récupérés et analysés.

La teneur initiale en hydrocarbures dans le milieu poreux, qui était de 41,7 g/kg n'est plus que de 1,8 g/kg dans le sable après 60 jours. Le taux d'hydrocarbures biodégradés correspondant au rapport hydrocarbures disparus/hydrocarbures au temps zéro (les hydrocarbures disparus étant calculés par différence entre la teneur au temps zéro et les teneurs récupérées dans le sable en fin d'essai et dans tous les effluents aqueux) est égal à 83,6 %.

### EXEMPLE 14

L'essai 13 est répété, mais en remplaçant le NP 9 par les sophorolipides GH 153 de l'exemple 1 ajoutés au milieu minéral à raison de 0,05 % en poids par rapport au milieu minéral.

La teneur initiale en hydrocarbures dans le milieu poreux, de 30,1 g/kg est passée après 60 jours à 8,6 g/kg dans le sable. Le taux de biodégradation des hydrocarbures est de 54,7 %.

### EXEMPLE 15

L'essai 13 est répété, mais en ajoutant au milieu minéral 0,05 % (en poids) d'une composition contenant un mélange NP 9/GH 153 dans un rapport 3/2.

La teneur initiale en gazole dans le milieu poreux, de 31,3 g/kg n'est plus que de 0,8 g/kg dans le sable après 60 jours d'expérimentation. Le taux de biodégradation des hydrocarbures est de 87,5 %.

### EXEMPLE 16

L'essai 13 est répété en doublant la concentration en NP 9 dans le milieu minéral, soit 0,1 % en poids.

Après 60 jours d'essai, la teneur en gazole dans le sable qui était initialement de 44,3 g/kg n'est plus que de 0,9 g/kg et le taux de biodégradation des hydrocarbures est de 82,0 %. On se rend compte que même en doublant la concentration de NP 9, on n'atteint pas les valeurs de l'exemple 15.

### EXEMPLE 17

L'essai 13 est répété, mais en remplaçant le tensio-actif non ionique, le NP 9, par le tensio-actif anionique de l'exemple 1, le di-octylsulfosuccinate de sodium, (DOS), à une concentration de 0,05 % en poids.

La concentration en hydrocarbures dans le sable passe de 33,8 g/kg au temps zéro à 1,8 g/kg après 60 jours d'essai. Le taux de biodégradation des hydrocarbures est de 81,5 %.

### EXEMPLE 18

L'essai 17 est répété, mais en remplaçant le tensio-actif anionique DOS par un mélange DOS, sophorolipides GH 153 dans un rapport 3/2, et à une concentration de 0,05 % en poids par rapport au milieu minéral.

La concentration en hydrocarbures dans le sable passe de 38,2 g/kg au temps zéro à 0,3 g/kg après 60 jours d'essai. Le taux de biodégradation des hydrocarbures est de 98,1 %.

### EXEMPLE 19

L'essai 13 est répété, mais en remplaçant le NP 9 par le rhamnolipide RL1 de l'exemple 5 ajouté au milieu minéral à raison de 0,05 % en poids par rapport au milieu minéral.

La teneur initiale en hydrocarbures dans le milieu poreux, de 33 g/kg est passée après 60 jours à 9,5 g/kg dans le sable. Le taux de biodégradation des hydrocarbures est de 53,0 %.

### EXEMPLE 20

L'essai 13 est répété, sauf que l'on ajoute au milieu minéral 0,05 % (en poids) une composition contenant un mélange NP 9/RL1 dans un rapport 3/2.

La teneur initiale en gazole dans le milieu poreux, de 35 g/kg n'est plus que de 0,9 g/kg dans le sable après 60 jours d'expérimentation. Le taux de biodégradation des hydrocarbures est de 86,1 %.

### EXEMPLE 21

L'essai 13 est répété, mais en remplaçant le tensio-actif non ionique, le NP 9, par le tensio-actif anionique de l'exemple 1, le di-octylsulfosuccinate de sodium (DOS), à une concentration de 0,05 % en poids.

La concentration en hydrocarbures dans le sable passe de 33,8 g/kg au temps zéro à 1,8 g/kg après 60 jours d'essai. Le taux de biodégradation des hydrocarbures est de 81,5 %.

### EXEMPLE 22

L'essai 21 est répété, mais en remplaçant le tensio-actif anionique DOS par un mélange de DOS et de rhamnolipide RL1 dans un rapport 3/2, et à une concentration de 0,05 % en poids par rapport au milieu minéral.

La concentration en hydrocarbures dans le sable passe de 35 g/kg au temps zéro à 0,3 g/kg après 60 jours d'essai. Le taux de biodégradation des hydrocarbures est de 97,9 %.

### EXEMPLE 23

Les essais 13, 19 à 22 ont été répétés avec un glycolipide qui est le cellobioselipide produit par Ustilago avec R₁ = H; R₁₂ = 15 ; R₁₃ = acétyl ; R₁₄ = 4 ,puis estérifié et on a obtenu des résultats sensiblement équivalents.

### EXEMPLE 24

Les propriétés avantageuses des sophorolipides ont été confirmées par des essais d'extraction d'un polluant, le gazole routier, piégé dans un milieu poreux.

La procédure expérimentale comprend les étapes suivantes :
- Saturation, par l'eau de ville, d'une colonne de 25 cm de longueur et 2 cm de diamètre, remplie avec le sable décrit dans l'exemple 1.
- Déplacement d'une partie de cette eau par injection du polluant jusqu'à obtenir la saturation irréductible en eau.
- Injection d'eau de ville jusqu'à obtention de la saturation résiduelle en polluant.
- Injection d'eau de ville contenant 10 g/l de tensioactifs (en matière active), suivie d'une injection d'eau de ville. Chacune de ces deux dernières injections représente 5 fois le volume de pores (Vₚ) de la colonne.

Dans le tableau ci-dessous, l'efficacité d'un mélange DOS et GH 153 à extraire le polluant résiduel est comparée à celle d'un mélange de tensioactifs conventionnels (DOS-NP9). La composition des deux formulations a été ajustée de manière à présenter un optimum d'efficacité d'extraction. Dans ce but, d'une part la salinité de la solution de DOS-GH 153 a été augmentée de 1,5 g/l de NaCl, celle de la solution de DOS-NP9 a été augmentée de 5,0 g/l de NaCl. D'autre part le rapport massique DOS-GH 153 a été fixé à 5, celui du mélange DOS-NP9 à 2,33.

| | Quantité de polluant extrait (% du polluant résiduel) | | | |
|---|---|---|---|---|
| Solution de tensioactifs (10 g/l) | 2 Vₚ * | 4 Vₚ* | 6 Vₚ* | 10 Vₚ* |
| DOS-NP 9 | 0,4 | 38,9 | 57,5 | 95,6 |
| DOS-GH 153 | 22,5 | 73,5 | 100,0 | - |

| | | | | |
|---|---|---|---|---|
| * Volume total injecté, exprimé en volume de pores, à partir du début de l'injection de la solution de tensioactifs. | | | | |

## Revendications

1. Composition contenant en poids :
- de 0,01 à 99,99 % d'au moins un composé tensioactif anionique et/ou non ionique
- et de 99,99 % à 0,01 %, d'au moins un glycolipide dont la fonction acide est totalement sous forme d'esters.

2. Composition selon la revendication 1, contenant :
- de 45 à 85 % du composé tensio-actif
- et de 15 à 55 % du glycolipide.

3. Composition selon les revendications 1 et 2, dans laquelle le composé tensio-actif est un composé choisi dans le groupe formé par les alkylarylsulfonates sous forme de sels de sodium ou de calcium, ou sous forme d'amines linéaires ou ramifiées avec un nombre de carbone définissant l'amine compris entre 2 et 8, avec des groupements alkyles de 10 à 16 atomes de carbone, avec des groupements aryles au nombre de 1 à 10 et avec des groupements sulfonates au nombre de 1 à 2, les mono- ou diesters de sulfosuccinate de sodium ayant réagi avec des alcools linéaires de 6 à 20 atomes de carbone, les alkyl- ou alcénylsulfonates de sodium avec des groupements alkyles ou alcényles ayant 10 à 18 atomes de carbone, les sulfonates de pétrole commerciaux et les lignosulfonates de sodium, de calcium ou d'ammonium, et de préférence le composé tensio-actif est le dioctylsulfosuccinate de sodium, les sulfonates de pétrole commerciaux, le dodécylbenzène sulfonate d'isopropylamine ou le nonylphénol éthoxylé.

4. Composition selon les revendications 1 et 2, dans laquelle le composé tensio-actif est un composé choisi dans le groupe formé par les alkylphénols polyéthoxylés avec un nombre de groupements éthoxyles compris entre 8 et 24 et avec des groupements alkyles de nombre de carbone compris entre 8 et 12, le polyoxyéthylène alkylphénoxyéthanol, les esters d'acides gras polyéthoxylés, les éthers d'alcool gras avec un nombre de carbone de l'acide gras ou de l'alcool gras compris entre 4 et 18 et avec un nombre de groupements éthoxyles compris entre 4 et 12, et les mono- et polyoléates de sorbitol polyéthoxylés avec un nombre de groupements éthoxyles compris entre 4 et 8 et de préférence le nonylphénol éthoxylé avec 9 moles d'oxyde d'éthylène.

5. Composition selon l'une des revendications 1 à 4, dans laquelle lesdits esters proviennent de la réaction d'un alcool linéaire ou ramifié de 1 à 18 atomes de carbone et de préférence de 1 à 8.

6. Composition selon l'une des revendications 1 à 5, dans laquelle les glycolipides sont les sophorolipides, les rhamnolipides, les glucoselipides, les tréhaloselipides et les cellobioselipides.

7. Composition selon la revendication 6, dans laquelle les sophorolipides sous forme d'esters sont au moins en partie désacétylés et/ou au moins en partie délactonisés.

8. Composition selon la revendication 6, dans laquelle les cellobioselipides sous forme d'esters sont au moins en partie désacétylés.

9. Procédé de décontamination d'un milieu poreux pollué par des hydrocarbures selon lequel on introduit en solution aqueuse dans ledit milieu une composition contenant en poids :
- de 0,01 à 99,99% d'au moins un composé tensio-actif anionique et/ou non ionique
- et de 99,99% à 0,01 d'au moins un glycolipide, en quantité suffisante et dans des conditions appropriées pour décontaminer substantiellement le milieu et on récupère une partie au moins de la solution comprenant une partie au moins des hydrocarbures.

10. Procédé selon la revendication 9, dans lequel on utilise la composition selon l'une des revendications 1 à 8.

11. Procédé selon la revendication 9 dans lequel on utilise la composition contenant le glycolipide choisi dans le groupe formé par les sophorolipides, les rhamnolipides, les glucoselipides, les tréhaloselipides et les cellobioselipides, sous leur forme brute.

12. Procédé selon la revendication 11 dans lequel les sophorolipides sous leur forme brute sont au moins en partie desacétylés et/ou au moins en partie délactonisés.

13. Procédé selon la revendication 11 dans lequel les cellobioselipides sont au moins en partie désacétylés.

14. Procédé selon l'une des revendication 9 à 13 dans lequel on introduit dans ledit milieu de 0,1 à 20 volumes de pore de la solution aqueuse contenant la composition à une concentration de 0,1 à 20 grammes par litre.

15. Procédé selon l'une des revendications 9 à 14, dans lequel la solution aqueuse contient de 0,01 à 1 % en poids d'au moins un additif choisi dans le groupe formé par le nitrate de sodium, le nitrate de potassium, le nitrate d'ammonium, le phosphate de potassium, le phosphate de sodium, le phosphate d'ammonium et une composition de polymères hydrosolubles de masse molaire élevée.

16. Procédé selon l'une des revendications 9 à 15, dans lequel on introduit dans le milieu pollué de 1 x 10⁵ à 1 x 10⁹ bactéries hydrocarbonoclastes par millilitre de solution aqueuse.

## Patentansprüche

1. Zusammensetzung, die, bezogen auf das Gewicht, enthält:
- 0,01 bis 99,99 % mindestens einer anionischen und/oder nichtionischen oberflächenaktiven Verbindung und
- 99,99 bis 0,01 % mindestens eines Glycolipids, dessen Säurefunktion vollständig in Form von Estern vorliegt.

2. Zusammensetzung nach Anspruch 1, die enthält
- 45 bis 85 % der oberflächenaktiven Verbindung und
- 15 bis 55 % des Glycolipids.

3. Zusammensetzung nach den Ansprüchen 1 und 2, in der die oberflächenaktive Verbindung eine Verbindung ist, die ausgewählt wird aus der Gruppe, die gebildet wird durch die Alkylarylsulfonate in Form der Natriumoder Calciumsalze oder in Form von linearen oder verzweigten Aminen mit einer Anzahl von Kohlenstoffatomen, die das Amin aufbauen, zwischen 2 und 8, mit Alkylgruppen mit 10 bis 16 Kohlenstoffatomen, mit Arylgruppen in einer Anzahl von 1 bis 10 und mit Sulfonatgruppen in einer Anzahl von 1 bis 2, die Mono- oder Diester von Natriumsulfosuccinat, die mit linearen Alkoholen mit 6 bis 20 Kohlenstoffatomen umgesetzt worden sind, die Natriumalkyl- oder -alkenylsulfonate mit Alkyl- oder Alkenylgruppen mit 10 bis 18 Kohlenstoffatomen, die handelsüblichen Petrolsulfonate und die Natrium-, Calcium- oder Ammoniumlignosulfonate, und vorzugsweise die oberflächenaktive Verbindung das Natriumdioctylsulfosuccinat, die handelsüblichen Petrolsulfonate, das Isopropylamindodecylbenzolsulfonat oder das ethoxylierte Nonylphenol ist.

4. Zusammensetzung nach den Ansprüchen 1 und 2, in der die oberflächenaktive Verbindung eine Verbindung ist, die ausgewählt wird aus der Gruppe, die gebildet wird durch die polyethoxylierten Alkylphenole mit einer Anzahl von Ethoxylgruppen zwischen 8 und 24 und mit Alkylgruppen mit 8 bis 12 Kohlenstoffatomen, das Polyoxyethylenalkylphenoxyethanol, die polyethoxylierten Fettsäureester, die Fettalkoholether mit einer Anzahl der Kohlenstoffatome der Fettsäure oder des Fettalkohols zwischen 4 und 18 und mit Ethoxylgruppen in einer Anzahl zwischen 4 und 12 und die polyethoxylierten Sorbitmono- und -polyoleate mit einer Anzahl der Ethoxylgruppen zwischen 4 und 8 und vorzugsweise das ethoxylierte Nonylphenol mit 9 mol Ethylenoxid.

5. Zusammensetzung nach einem der Ansprüche 1 bis 4, in der die genannten Ester aus der Reaktion mit einem linearen oder verzweigten Alkohol mit 1 bis 18, vorzugsweise 1 bis 8 Kohlenstoffatomen, stammen.

6. Zusammensetzung nach einem der Ansprüche 1 bis 5, in der die Glycolipide die Sophorolipide, die Rhamnolipide, die Glucoselipide, die Trehaloselipide und die Cellobioselipide sind.

7. Zusammensetzung nach Anspruch 6, in der die Sophorolipide in Form der Ester mindestens teilweise deacetyliert und/oder mindestens teilweise delactonisiert sind.

8. Zusammensetzung nach Anspruch 6, in der die Cellobioselipide in Form der Ester mindestens teilweise deacetyliert sind.

9. Verfahren zur Dekontamination eines durch Kohlenwasserstoffe verunreinigten porösen Mediums, bei dem man in das genannte Medium eine Zusammensetzung in wäßriger Lösung, die, bezogen auf das Gewicht, enthält:
- 0,01 bis 99,99 % mindestens einer anionischen und/oder nichtionischen oberflächenaktiven Verbindung und
- 99,99 bis 0,01 % mindestens eines Glycolipids,
in ausreichender Menge und unter Bedingungen einführt, die geeignet sind, das Medium im wesentlichen zu dekontaminieren, und bei dem man mindestens einen Teil der Lösung, die mindestens einen Teil der Kohlenwasserstoffe enthält, zurückgewinnt.

10. Verfahren nach Anspruch 9, bei dem man die Zusammensetzung nach einem der Ansprüche 1 bis 8 verwendet.

11. Verfahren nach Anspruch 9, bei dem man die Zusammensetzung verwendet, die das Glycolipid enthält, das ausgewählt wird aus der Gruppe, die gebildet wird durch die Sophorolipide, die Rhamnolipide, die Glucoselipide, die Trehaloselipide und die Cellobioselipide in ihrer rohen (unbearbeiteten) Form.

12. Verfahren nach Anspruch 11, bei dem die Sophorolipide in ihrer rohen (unbearbeiteten) Form mindestens zum Teil deacetyliert und/oder mindestens zum Teil delactonisiert sind.

13. Verfahren nach Anspruch 11, bei dem die Cellobioselipide mindestens zum Teil deacetyliert sind.

14. Verfahren nach einem der Ansprüche 9 bis 13, bei dem man in das genannte Medium 0,1 bis 20 Poren-Volumenteile der wäßrigen Lösung einführt, welche die Zusammensetzung in einer Konzentration von 0,1 bis 20 g/l enthält.

15. Verfahren nach einem der Ansprüche 9 bis 14, bei dem die wäßrige Lösung 0,01 bis 1 Gew.-% mindestens eines Additivs enthält, das ausgewählt wird aus der Gruppe, die gebildet wird durch Natriumnitrat, Kaliumnitrat, Ammoniumnitrat, Kaliumphosphat, Natriumphosphat, Ammoniumphosphat und eine Zusammensetzung von wasserlöslichen Polymeren mit erhöhter Molekularmasse.

16. Verfahren nach einem der Ansprüche 9 bis 15, bei dem man in das verunreinigte Medium 1 x 10⁵ bis 1 x 10⁹ Hydrocarbonoclast-Bakterien pro ml der wäßrigen Lösung einführt.

## Claims

1. Composition containing by weight:
- 0.01 to 99.99% of at least one anionic and/or non-ionic surface active compound
- and 99.99 to 0.01% of at least one glycolipid, whose the acidic function is totally in the form of esters.

2. Composition according to claim 1, containing:
- 45 to 85 % of the surface active compound
- and 15 to 55 % of the glycolipid.

3. Composition according to claims 1 and 2, in which the surface active compound is a compound chosen from the group formed by the alkylarylsulphonates in the form of sodium or calcium salts, or in the form of linear or branched amines with the number of carbon atoms defining the amine comprised between 2 and 8, with alkyl groups of 10 to 16 carbon atoms, with aryl groups with 1 to 10 carbon atoms, and with sulphonate groups with 1 to 2 carbon atoms, the mono- or diesters of sodium sulphosuccinate having been reacted with linear alcohols with 6 to 20 carbon atoms, the alkyl- or alkenylsulphonates of sodium with alkyl or alkenyl groups having 10 to 18 carbon atoms, the sulphonates of commercial petroleum and sodium or calcium or ammonium lignosulphonates and preferably the surface active compound is sodium dioctylsulphosuccinate, the sulphonates of commercial petroleum, isopropylamine dodecylbenzene sulphonate or ethoxylated nonylphenol.

4. Composition according to claims 1 and 2, in which the surface active compound is a compound chosen from the group formed by the polyethoxylated alkylphenols with the number of ethoxyl groups comprised between 8 and 24 and with alkyl groups with the number of carbon atoms comprised between 8 and 12, polyoxyethylene alkylphenoxyethanol, the esters of polyethoxylated fatty acids, the ethers of polyethoxylated fatty alcohols with the number of carbon atoms of the fatty acid or fatty alcohol comprised between 4 and 18 and with the number of ethoxylated groups comprised between 4 and 12, and polyethoxylated mono- and polyoleates of sorbitol with a number of ethoxyl groups comprised between 4 and 8 and preferably the nonylphenol ethoxylated with 9 moles of ethylene oxide.

5. Composition according to one of claims 1 to 4, in which the said esters result from the reaction of a linear or branched alcohol with 1 to 18 carbon atoms and preferably 1 to 8.

6. Composition according to one of claims 1 to 5, in which the glycolipids are sophorolipids, rhamnolipids, glucoselipids, trehaloselipids and cellobioselipids.

7. Composition according to claim 6, in which the sophorolipids in the form of esters are at least in part deacetylated and/or at least in part delactonized.

8. Composition according to claim 6, in which the cellobioselipids in the form of esters are at least in part deacetylated.

9. Decontamination process for a porous medium polluted by hydrocarbons according to which a composition containing by weight:
- 0.01 to 99.99 % of at least one anionic and/or non-ionic surface active compound
- and 99.99 to 0.01 % of at least one glycolipid, is introduced in aqueous solution into the said medium in sufficient quantity and under the appropriate conditions in order to substantially decontaminate the medium and at least a part of the solution containing at least a part of the hydrocarbons is recovered.

10. Process according to claim 9, in which the composition according to one of claims 1 to 8 is used.

11. Process according to claim 9, in which the composition containing the glycolipid chosen from the group formed by sophorolipids, rhamnolipids, glucoselipids, trehaloselipids and cellobioselipids in their crude form is used.

12. Process according to claim 11, in which the sophorolipids in their crude form are at least in part deacetylated and/or at least in part delactonized.

13. Process according to claim 11, in which the cellobioselipids are at least in part deacetylated.

14. Process according to one of claims 9 to 13, in which 0.1 to 20 pore volumes of the aqueous solution containing the composition is introduced into said medium at a concentration of 0.1 to 20 grams per litre.

15. Process according to one of claims 9 to 14, in which the aqueous solution contains 0.01 to 1% by weight of at least one additive chosen from the group formed by sodium nitrate, potassium nitrate, ammonium nitrate, potassium phosphate, sodium phosphate, ammonium phosphate and a composition of hydrosoluble polymers of high molar mass.

16. Process according to one of claims 9 to 15, in which 1 x 10⁵ to 1 x 10⁹ hydrocarbon-destroying bacteria per millilitre of aqueous solution are introduced into the polluted medium.
